# EUROPÄISCHE PATENTANMELDUNG

(11) **EP 1 076 040 A1**
(43) Veröffentlichungstag der Anmeldung: **14.02.2001**
(21) Anmeldenummer: 99115812.2
(22) Anmeldetag: 11.08.1999
(51) Int. Cl.: C02F 1/70, C02F 1/72

(54) **Verfahren zur Minimierung von aox-Verbindungen in Abwässern**

(71) Anmelder: Sächsisches Textilforschungsinstitut e.V., 09125 Chemnitz (DE)
(72) Erfinder: Teichmann, Rainer, Dr., 09119 Chemnitz (DE); Reif, Joachim, 09224 Chemnitz (DE)

(57) **Zusammenfassung**

Die Erfindung betrifft ein Verfahren zur Minimierung von AOX-Gehalten in Wässern, vorzugsweise Abwässern, durch Mineralisierung der halogenorganischen Verbindungen mittels radikalischer Oxidation, indem die Radikale im Zuge einer Redoxreaktion gebildet werden, bei der das Redoxsystem aus einem höhermolekularen, vorzugsweise festem polymeren Reduktionsmittel, welches gleichzeitig als Träger für die entstehenden Radikale fungiert, und einer Mangan(IV)- oder Mangan(III)-Verbindung als Oxidationsmittel besteht. Erst der Kontakt mit dem sauer eingestellten AOX-haltigen Medium löst die Radikalbildung aus. Eine besonders vorteilhafte Variante ergibt sich, wenn das Oxidationsmittel aktiver Braunstein ist, welcher durch den reduzierend wirkenden höhermolekularen, beispielsweise textilen Träger separat aus wäßriger Kaliumpermanganatlösung in neutralem Medium erzeugt und gleichzeitig an diesem Träger fixiert wird.

## Beschreibung

Die Erfindung betrifft ein Verfahren zur Minimierung von AOX-Gehalten in Wässern, vorzugsweise Abwässern, durch Mineralisierung der halogenorganischen Verbindungen (HOV) mittels radikalischer Oxidation. HOV-Mineralisierung bzw. AOX-Abnahme beschreiben demnach ein und denselben Vorgang (wobei sich die Abkürzung AOX für "adsorbierbare organische Halogene" auf das Meßverfahren bezieht).

Es ist Praxis, AOX-Gehalte in Wässern zu minimieren oder zu beseitigen. Weil AOX-haltige Verbindungen in der Regel Schadstoffe sind, ist dies sogar geboten und wird demzufolge in den diversen Gesetzgebungen vorgeschrieben. Als geeignete Methoden kommen bekanntlich chemische, physikalische und biologische Verfahrensweisen, häufig eine Kombination aus diesen, in Frage.

Bei den chemischen Einwirkungen dominieren oxidative Verfahren, unter anderem solche, die Radikale als wirksame Spezies nutzen. Bekanntestes Beispiel für letztere ist der Einsatz von Fenton's Reagenz, einer Mischung aus Wasserstoffperoxid und Eisen(II)-Ionen, die OH-Radikale freisetzt. Auf der Basis von Fenton's Reagenz existieren zahlreiche Modifizierungen des Verfahrens (z. B. DOS 38 32 523, DOS 43 14 521, EP 371 187, EP 609 272, DOS 196 07 392, EP 832 853). Radikale können aber auch auf anderem Wege gebildet werden und spielen im allgemeinen im Zusammenhang mit UV-Strahlen eine Rolle (DOS 41 37 864, EP 507 939, WO 98 / 57 895).

Die vorstehend angeführte DOS 41 37 864 erwähnt u. a. das Vorhandensein von H₂O₂ neben Mn²⁺, was auf Analogie zu Fenton's Reagenz schließen läßt. Auch EP 563 147 führt diese Kombination an. Überhaupt empfiehlt man manganhaltige Komponenten wegen ihres großen Redoxpotentials zwischen den einzelnen Wertigkeitsstufen des Mangans häufig als Reaktionspartner, so etwa in DOS 38 11 789, EP 363 704, EP 568 389, EP 595 789, EP 748 296 und EP 913 193. Mitunter erfüllen die Manganverbindungen dabei nur eine katalytische Funktion, werden also selbst nicht verbraucht.

Alle diese Verfahrensweisen arbeiten jedoch nicht schnell genug, erzeugen mehrheitlich viel Schlamm, sind nur auf die Zerstörung einiger weniger organischer Verbindungen beschränkt und/oder in ihrer Anwendung zu umständlich. Auch gibt es zum Teil preisliche Bedenken, zumal oft der vorgeschlagene Behandlungsschritt allein nicht ausreicht, sondern verschiedene Behandlungsmethoden kombiniert werden müssen. Die fehlende Effektivität wird zumeist dadurch verursacht, daß das Oxidationsmittel im Behandlungsmedium delokalisiert vorliegt und deshalb nicht gezielt wirken kann. Aus diesem Grunde sind in der Regel auch mehr oder weniger große Überschüsse solcher Chemikalien erforderlich, die das Verfahren unnötig verteuern und den Anfall unerwünschter Fremdprodukte fördern.

Ein Ausweg wäre der Einsatz von Trägermaterialien für das Oxidationsmittel bzw. Anteile des oxidierenden Systems, was auch verschiedentlich vorgeschlagen wird (DOS 34 30 484, EP 363 704, EP 568 389, EP 748 296, EP 787 689). Diese Möglichkeit verliert allerdings an Effizienz, wenn die Fixierung der wirksamen Chemikalie(n) nicht ausreichend fest ist und wenn der Träger nicht selbst als Teil des Reaktionssystems dient, wie das auf die angeführten Beispiele zutrifft. Außerdem ist die Präparation der Verbundstrukturen oft aufwendig.

Der Erfindung liegt die Aufgabe zugrunde, die angeführten, verschiedenartigen Nachteile zu überwinden. Es soll also eine Verfahrensweise zur Minimierung von AOX in Wässern, vorzugsweise Abwässern, entwickelt werden, die bei kurzer Behandlungszeit hochwirksam, darüber hinaus einfach, billig und technologisch variabel ist. Fremdchemikalien dürfen das zu behandelnde Medium nur unwesentlich belasten. Schlammbildung ist gering zu halten. Für die anderen Rückstände muß ein leichtes Handling vorliegen. Die biologische Abbaubarkeit der Restinhaltsstoffe in den Wässern soll nach der Behandlung verbessert sein.

Überraschenderweise wurde nun gefunden, daß Organohalogenverbindungen in Wässern, vorzugsweise Abwässern, durch radikalische Oxidation mineralisiert werden können, verbunden mit einer drastischen Absenkung der AOX-Gehalte, indem die Radikale im Zuge einer Redoxreaktion gebildet werden, bei der das Redoxsystem aus einem höhermolekularen, vorzugsweise festem polymeren Reduktionsmittel, welches gleichzeitig als Träger für die entstehenden Radikale fungiert, und einer Mangan(IV)- oder Mangan(III)-Verbindung als Oxidationsmittel besteht. Erst der Kontakt mit dem sauer eingestellten AOX-haltigen Medium löst die Radikalbildung aus. Eine besonders vorteilhafte Verfahrensvariante ergibt sich, wenn das Oxidationsmittel aktiver Braunstein ist, welcher durch den reduzierend wirkenden höhermolekularen Träger separat aus wäßriger Kaliumpermanganatlösung in neutralem Medium erzeugt und gleichzeitig an diesem Träger fixiert wird.

Die mit der Erfindung erzielten Vorzüge bestehen insbesondere darin, daß die beschriebene, neuartige Verfahrensweise in kurzen Zeiträumen zu weitgehender Mineralisierung der halogenorganischen Verbindungen führt, ohne daß aufwendige zusätzliche Verfahrensschritte notwendig sind. Das Verfahren ist einfach und billig sowie für HOV spezifisch. Sonst übliche Nachteile, wie Schlammbildung, überschüssiger Chemikalienverbrauch, schwieriges Handling und außergewöhnliche Reaktionsbedingungen im Verein mit besonderen Anforderungen an die Werkstoffe, entfallen fast vollständig. Erwünschte Nebeneffekte, wie beispielsweise Farbminderung im Falle farbiger Abwässer, treten zusätzlich auf.

Die oben schon erwähnte vorteilhafte Ausgestaltung der Erfindung durch Bildung und Fixierung des Oxidationsmittels Braunstein am Trägerpolymeren in einem ersten Verfahrensschritt (Patentanspruch 3) gestattet die vollständige Ausnutzung des Oxidationsmittels in stöchiometrischen Verhältnissen, zumal die Radikalbildung erst bei Kontakt mit dem sauer eingestellten Medium, also bei Vorliegen des zu mineralisierenden AOX-haltigen Stoffes, erfolgt. Radikalverluste durch Weiteroxidation sind damit minimiert. Wird ferner dafür gesorgt, daß der Träger eine große spezifische Oberfläche besitzt, wie sie u. a. textile Faserstoffe aufweisen, und darüber hinaus radikalische Strukturen entstehen, deren Lebensdauer nicht nur Bruchteile von Sekunden beträgt, sind optimale Mineralisierungsbedingungen gegeben. Besonders günstig erweisen sich in diesem Zusammenhang feintitrige Polyamidfaserstoffe, aber auch Cellulose, Stärke, Wolle, modifizierter (wasserunlöslicher) Polyvinylalkohol, Naturseide und andere reduzierend wirkende Trägerpolymere sind geeignet. Diese Produkte sollen frei von störenden Substanzen, etwa Farbstoffen, sein, um ihre Reaktivität voll für die Radikalbildung auszunutzen. Dem gleichen Zweck dient auch die Optimierung der Reaktionsbedingungen in Abhängigkeit von den Reaktionspartnern Oxidationsmittel und reduzierend wirkender Träger, wobei aber vorzugsweise mit möglichst niedrigem Flottenverhältnis (= Masseverhältnis des oxidationsmittelbeladenen Trägermaterials zur AOX-haltigen Lösung), bei einem pH-Wert von 2 bis 3, Reaktionszeiten von 10 bis 20 Minuten, einer Temperatur zwischen 30 und 60 °C sowie einer Mangankonzentration von 0,2 bis 0,8 %, bezogen auf das Trägermaterial, ohne weitere die Behandlung belastende Faktoren zu arbeiten ist. Ein niedriges Flottenverhältnis kann insbesondere dadurch erreicht werden, daß das AOX-haltige Medium durch das Trägermaterial, etwa in einer Säule, geleitet wird, d. h. der Träger die stationäre Phase darstellt. Erfindungsgemäß kann gleichzeitig mit der chemischen Radikalbildung eine physikalische Behandlung stattfinden, um die Wirksamkeit noch zu erhöhen. Hierfür sind verschiedenartige Energieeinträge möglich, u. a. auch mittels UV-Strahlen; zu bevorzugen ist jedoch Ultraschallbehandlung. Gleichfalls erfindungsgemäß kann es sich beim Trägermaterial um textile Abfälle handeln. Der AOX-Gehalt muß nicht aus-schließlich aus in den Wässern gelösten Anteilen bestehen, ebenso partikuläre Bestandteile sind möglich. Im übrigen vermag die beschriebene Verfahrensweise über die C―Halogen-Bindung hinaus in untergeordnetem Maße auch andere Bindungen aufzuspalten.

Nachfolgende Ausführungsbeispiele verdeutlichen die vorgeschlagene Vorgehensweise, ohne daß damit Beschränkungen zum Ausdruck kommen sollen:

### Ausführungsbeispiel 1:

5 g Trägerpolymeres in Form von in cm-Stücke zerschnittenem Polyamid-6-Gewebe wird 15 min lang bei 60 °C in 200 ml 0,01 m wäßriger Kaliumpermanganatlösung unter leichtem Schütteln behandelt. Danach dekantiert man ab (die Lösung ist weiterverwendbar) und befreit das Trägermaterial von noch anhaftendem Kaliumpermanganat durch Auswaschen mit Wasser. Der gebildete braune Mangan(IV)/Polymer-Verbund wird nun mit 200 ml einer wäßrigen Lösung, die p-Chlorphenol in einer Konzentration von 5 mg/l AOX enthält und mittels Salpetersäure auf einen pH-Wert von 2,5 eingestellt worden ist, während 15 min bei 60 °C unter leichtem Schütteln behandelt. Anschließend trennt man Trägermaterial und Flüssigkeit voneinander und führt im flüssigen Medium die AOX-Wert-Bestimmung durch. Der AOX-Wert ist um 90 % kleiner geworden.

### Ausführungsbeispiel 2:

Statt der Modell-Lösung mit p-Chlorphenol wird ein Realabwasser aus der Textilindustrie mit einem Ausgangs-AOX-Wert von 9,3 mg/l eingesetzt. Durch die Behandlung nimmt der AOX-Gehalt um 85 % ab. Gleichzeitig verringern sich die Durchsichtsfarbzahlen des blauen Abwassers wie folgt: bei 436 nm: 39,0 → 19,0 m⁻¹, bei 525 nm: 74,7 → 26,6 m⁻¹, bei 620 nm: 189 → 35,2 m⁻¹. Der CSB-Wert sinkt von 1520 auf 920 mg/l.

### Ausführungsbeispiel 3:

Gegenüber Beispiel 1 besteht das Trägermaterial aus Stärkepulver (Korngröße < 65 µm). 25 g davon werden in 1 1 Kaliumpermanganatlösung behandelt und anschließend in einer Säule stationiert. Durch diese fließen nach anfänglichen 5 min Verweilzeit während 15 min 250 ml einer 40 °C warmen, mit 7,5 mg/l AOX belasteten wäßrigen Probe von Trichloressigsäure. Der AOX-Wert hat sich im Auslauf um 96 % verkleinert.

## Patentansprüche

1. Verfahren zur Minimierung von AOX-Gehalten in Wässern, vorzugsweise Abwässern, durch Mineralisierung der Organohalogenverbindungen mittels radikalischer Oxidation, *dadurch gekennzeichnet,* daß die Radikale im Zuge einer Redoxreaktion gebildet werden, bei der das Redoxsystem aus einem höhermolekularen, vorzugsweise festem polymeren Reduktions-mittel, welches gleichzeitig als Träger für die entstehenden Radikale fungiert, und einer Mangan(IV)- oder Mangan(III)-Verbindung als Oxidationsmittel besteht, und daß erst der Kontakt mit dem sauer eingestellten AOX-haltigen Medium die Radikalbildung auslöst.

2. Verfahren zur Minimierung von AOX-Gehalten nach Anspruch 1, *dadurch gekennzeichnet,* daß der feste polymere Träger neben seinem Reduktionsvermögen als weitere charakte-ristische Eigenschaft eine große spezifische Oberfläche aufweist und daß vorzugsweise feintitrige, ungefärbte Polyamidfaserstoffe solche Trägermaterialien sind.

3. Verfahren zur Minimierung von AOX-Gehalten nach Anspruch 1, *dadurch gekennzeichnet,* daß das Oxidationsmittel aktiver Braunstein ist, welcher durch den reduzierend wirkenden höhermolekularen Träger separat aus wäßriger Permanganatlösung in neutralem Medium erzeugt und gleichzeitig an diesem Träger fixiert wird.

4. Verfahren zur Minimierung von AOX-Gehalten nach den Ansprüchen 1 bis 3, *dadurch gekennzeichnet,* daß die Reaktionsbedingungen bei der Mineralisierung in weiten Grenzen variabel sind, vorzugsweise aber mit niedrigem Flottenverhältnis, bei einem pH-Wert von 2 bis 3, Reaktionszeiten von 10 bis 20 Minuten, einer Temperatur zwischen 30 und 60 °C sowie einer Mangankonzentration von 0,2 bis 0,8 %, bezogen auf das Trägermaterial, gearbeitet wird.

5. Verfahren zur Minimierung von AOX-Gehalten nach den Ansprüchen 1 bis 3, *dadurch gekennzeichnet,* daß der oxidationsmittelbeladene feste Träger sowohl als mobile wie auch als stationäre Phase eingesetzt werden kann, wobei die letztere Form zu bevorzugen ist.

6. Verfahren zur Minimierung von AOX-Gehalten nach den Ansprüchen 1, 2 und 5, *dadurch gekennzeichnet,* daß textile Abfälle als Trägermaterialien dienen.

7. Verfahren zur Minimierung von AOX-Gehalten nach Anspruch 1, *dadurch gekennzeichnet,* daß die radikalische Oxidation durch eine physikalische Einwirkung, vorzugsweise eine Ultraschallbehandlung, synergistisch unterstützt wird.

8. Verfahren nach den Ansprüchen 1 und 7, *dadurch gekennzeichnet,* daß neben der AOX-Minimierung auch eine CSB-Wert-Reduzierung und im Falle von Farbigkeit des Mediums eine Farbminderung oder -beseitigung erzielt wird.
